# FASCICULE DE BREVET EUROPEEN

(11) **EP 4 343 133 B1**
(45) Date de publication et mention de la délivrance du brevet: **04.02.2026**
(21) Numéro de dépôt: 23198317.2
(22) Date de dépôt: 19.09.2023
(51) Int. Cl.: F02C 7/32, F02C 7/36, F01D 15/10

(54) **BOITIER D'ACCESSOIRES COMPACT COMPORTANT UNE MACHINE ELECTRIQUE INTEGREE**
KOMPAKTES ZUBEHÖRGEHÄUSE MIT INTEGRIERTER ELEKTRISCHER MASCHINE
COMPACT ACCESSORY BOX COMPRISING AN INTEGRATED ELECTRIC MACHINE

(30) Priorité: 20.09.2022 FR 2209462
(43) Date de publication de la demande: 27.03.2024
(73) Titulaire: Safran Transmission Systems, 92700 Colombes (FR)
(72) Inventeur: FALGUIERE, Clément, 77550 MOISSY-CRAMAYEL (FR); CADET, Clément Romain Aimé, 77550 MOISSY-CRAMAYEL (FR); CHAPUT, Florian Pierre-Yves, 77550 MOISSY-CRAMAYEL (FR); MARTIN, Raphaël Clément Stéphane, 77550 MOISSY-CRAMAYEL (FR)
(74) Mandataire: Gevers & Orès

(56) Documents cités:
- US-A1- 2009 309 461
- US-A1- 2011 284 328
- US-A1- 2015 311 770

## Description

### Domaine technique de l'invention.

L'invention est relative au domaine des turbomachines pour aéronefs, et notamment à celui des boîtiers d'accessoires équipant de telles turbomachines.

### Arrière-plan technique

Il est connu de l'art antérieur, les documents US 2009/309461 A1, US 2011/284328 A1 et US 2015/311770 A1.

Une turbomachine d'aéronef telle qu'une turbomachine double flux comprend de manière générale une soufflante carénée disposée en entrée de la turbomachine et qui est entrainée en rotation par un arbre basse pression. Dans certaines configurations de turbomachines à taux de dilution élevé, dites UHBR pour «Ultra High By Pass Ratio », un réducteur peut être interposé entre la soufflante et l'arbre basse pression pour que la soufflante tourne à une vitesse inférieure à celle de l'arbre de basse pression. La réduction de la vitesse permet également d'augmenter la taille de la soufflante, et ainsi d'atteindre des taux de dilution élevés.

La turbomachine comprend un boîtier d'accessoires connu sous l'acronyme anglais AGB (pour « Accessory Gear Box ») pour alimenter différents équipements ou accessoires nécessaires au fonctionnement de la turbomachine ou de l'aéronef. Un exemple d'accessoire classique est un alternateur à aimant permanent (généralement appelé PMA signifiant « Permanent Magnet Alternator ») qui assure la production de courant électrique à l'aide typiquement du boitier d'accessoires. En particulier, l'alternateur est destiné à fournir une alimentation électrique au calculateur de la turbomachine tel que le FADEC (dont l'acronyme signifie en anglais « Full Authority Digital Engine Control ») à partir d'un régime de ralenti.

Le boîtier d'accessoires est constitué d'une série de trains d'engrenages entrainant les équipements avec des ratios de vitesses différents. L'accouplement du boîtier d'accessoires avec la turbomachine est conventionnement effectuée à l'aide d'un arbre radial qui est accouplé sur le rotor du compresseur haute pression, qui entraîne un arbre de transfert accouplé au boîtier d'accessoires par l'intermédiaire d'un dispositif de renvoi d'angle connu sous l'acronyme TGB pour « Transfert Gear Box » en anglais.

La propulsion hybride est un axe essentiel de développement visant à réduire l'empreinte carbone du transport aérien. En effet, la combinaison de l'énergie thermique avec l'énergie électrique permet de réduire la consommation en carburant et donc les émissions de CO2, mais également de diminuer les nuisances sonores et d'améliorer la sécurité de la propulsion en cas de défaillance de la partie thermique de la turbomachine.

L'application de l'hybridation est susceptible de prendre différentes formes sur les aéronefs, mais demande généralement d'intégrer de plus en plus d'équipements électriques dans les boîtiers d'accessoires, et en particulier non plus seulement des alternateurs mais également des machines électriques pouvant fournir une puissance motrice.

Ce besoin en nouveaux équipements pose des problèmes en termes d'encombrement des boîtiers d'accessoires, car les équipements qui sont fixés sur un boîtier d'accessoires sont généralement fixés au carter de celui-ci sur deux parois latérales parallèles sensiblement planes et opposées entre lesquelles sont montés des arbres porteurs de chacun des pignons des trains d'engrenages. Par conséquent, l'ajout d'un nouvel équipement extérieur comme une machine électrique augmente l'encombrement, notamment axial, du boîtier d'accessoires. Cette augmentation de l'encombrement est d'autant plus préjudiciable que les évolutions actuelles de l'implantation des boîtiers d'accessoires visent à les implanter au droit de la zone centrale de la turbomachine, là où l'espace disponible est réduit, plutôt qu'au droit la soufflante. La compacité des boîtiers d'accessoires et de leurs équipements devient donc une priorité et il est donc souhaitable d'intégrer de plus en plus les équipements à l'intérieur du carter du boîtier d'accessoires.

Une machine électrique est en particulier un accessoire particulièrement encombrant. Pour mémoire, une machine électrique est un dispositif électromécanique basé sur l'électromagnétisme permettant la conversion d'énergie électrique par exemple en énergie mécanique (mode moteur) ou de manière réversible, permettant la production de l'électricité à partir d'une énergie mécanique (mode générateur). La machine électrique peut basculer du mode générateur au mode en moteur, et réciproquement, selon la façon dont elle est commandée.

Le document FR-2 897 895 A1 propose l'intégration d'une machine électrique de type démarreur-générateur réalisée en deux parties à l'intérieur d'un boîter d'accessoires dont le carter est modifié pour accueillir de part et d'autre d'un pignon, d'un côté une génératrice synchrone avec un rotor formant inducteur et un stator formant induit, et de l'autre côté, une excitatrice ayant un stator formant inducteur et un rotor formant induit relié à l'inducteur de la génératrice. L'implantation du démarreur-générateur dans ce cas de figure ne permet plus au boîtier d'accessoires d'avoir de parois latérales planes et augmente considérablement l'encombrement axial du boîter d'accessoires. De plus, la séparation du démarreur-générateur en deux parties placées chacune d'un côté du pignon augmente considérablement la complexité du montage du boîtier d'accessoires.

Il n'existe donc pas à l'heure actuelle de boîtier d'accessoires recevant une machine électrique avec un encombrement réduit. Un tel équipement n'est pas totalement intégré à l'AGB. Il existe donc un réel besoin pour une machine électrique intégrée de manière compacte à l'AGB.

### Résumé de l'invention

L'invention propose de satisfaire à ce besoin en proposant un boîtier d'accessoires tirant parti d'un volume interne pour y loger une machine électrique.

Dans ce but l'invention propose un boîtier d'accessoires pour une turbomachine d'aéronef, ledit boîtier comprenant un carter définissant une enceinte qui loge au moins un train d'engrenages comportant une série de pignons, le carter comportant deux parois latérales parallèles planes et opposées entre lesquelles sont montés des arbres porteurs de chacun des pignons du train d'engrenages,
lesdites parois latérales du carter recevant chacune des accessoires qui comportent chacun un arbre traversant une des parois et qui est accouplé avec l'arbre porteur d'un des pignons du train d'engrenages, et une des parois latérales étant apte à être traversée par un arbre de transfert d'un dispositif de transmission de puissance de la turbomachine qui est accouplé avec un arbre porteur d'un des pignons du train d'engrenages,
les parois latérales du carter délimitant dans l'enceinte, un volume interne qui entoure un arbre porteur d'au moins un pignon dit pignon d'hybridation, ledit arbre étant entouré par une machine électrique dans le boîtier, ladite machine comportant au moins un rotor et un stator,
le rotor de la machine électrique étant porté par l'arbre porteur du pignon d'hybridation du train d'engrenages et le stator, s'étendant autour dudit rotor, est monté au sein de l'enceinte dans ledit volume interne, caractérisé en ce que ledit rotor comporte une face venant en butée sur une portion du pignon d'hybridation.

Le boîtier d'accessoires selon l'invention présente donc conventionnellement deux parois latérales parallèles planes et c'est entre ces parois qu'est logée la machine électrique. Il ne comporte donc pas d'excroissance pouvant altérer sa compacité.

Selon d'autres caractéristiques du boîtier :
- l'arbre du pignon d'hybridation est monté tournant dans le carter entre deux paliers portés chacun par une des parois latérales et il comporte un premier tronçon recevant le pignon d'hybridation, agencé à proximité d'un premier desdits paliers, et un second tronçon qui s'étend entre ledit pignon d'hybridation et un second palier opposé, le rotor étant fixé audit second tronçon,
- le second tronçon de l'arbre est d'une seule pièce avec le premier tronçon,
- le pignon d'hybridation comporte un voile qui présente un diamètre supérieur au second tronçon de l'arbre du pignon d'hybridation et qui porte à sa périphérie externe une denture d'engrènement, et le rotor s'étend axialement à partir dudit voile vers le second palier, une portée extérieure du rotor agencée en retrait d'une extrémité libre de l'arbre recevant une bague intérieure du palier,
- des moyens de liaison en rotation sont interposés entre un alésage interne du rotor et le second tronçon de l'arbre du pignon d'hybridation,
- le pignon d'hybridation comporte un tronçon tubulaire qui s'étend à partir de son voile vers la paroi latérale adjacente et qui comporte à son extrémité une première collerette d'extrémité recevant au moins une bague intérieure d'un des paliers,
- l'arbre porteur du pignon d'hybridation est tubulaire et il comporte un alésage qui est coaxial avec un orifice formé dans une des parois latérales adjacente, ledit alésage comportant des cannelures internes d'accouplement avec un arbre d'un des accessoires fixé à ladite paroi adjacente,
- le pignon d'hybridation est un pignon intermédiaire du train d'engrenages,
- une face externe d'une des parois latérales porte un fourreau tubulaire qui est apte à entourer et à être traversé par l'arbre de transfert, et il comporte une machine électrique supplémentaire qui est montée à l'intérieur dudit fourreau,
- un stator de la machine électrique supplémentaire est fixé dans le fourreau et un rotor de la machine électrique supplémentaire est fixé à l'arbre de transfert, le stator de la machine supplémentaire étant monté autour du rotor de la machine électrique supplémentaire.

L'invention concerne aussi une turbomachine d'aéronef comportant un dispositif de transmission de puissance comportant :
- un arbre d'entraînement sensiblement radial monté solidaire en rotation d'un arbre principal de ladite turbomachine,
- un dispositif de renvoi d'angle accouplé audit arbre d'entrainement,
- un arbre de transfert accouplé audit dispositif de renvoi d'angle,
caractérisé en ce qu'elle comporte un boîtier d'accessoires du type décrit précédemment qui est accouplé audit arbre de transfert.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] La figure 1 est une vue schématique en coupe d'une turbomachine comportant un boîtier d'accessoires,
[Fig. 2] La figure 2 est une vue schématique en coupe d'un boîtier d'accessoires selon un état antérieur de la technique ;
[Fig. 3] La figure 3 est une vue schématique en coupe d'un boîtier d'accessoires selon l'invention ;
[Fig. 4] La figure 4 est une vue en coupe de l'implantation de la machine électrique autour de l'axe du pignon d'hybridation ;
[Fig. 5] La figure 5 est une vue schématique en coupe de l'implantation d'une machine électrique supplémentaire dans un fourreau entourant un arbre de transfert accouplé au boîtier d'accessoires.
[Fig. 6] La figure 6 est une vue en perspective coupée de l'implantation de la machine électrique dans le fourreau entourant l'arbre de transfert accouplé au boîtier d'accessoires.

### Description détaillée de l'invention

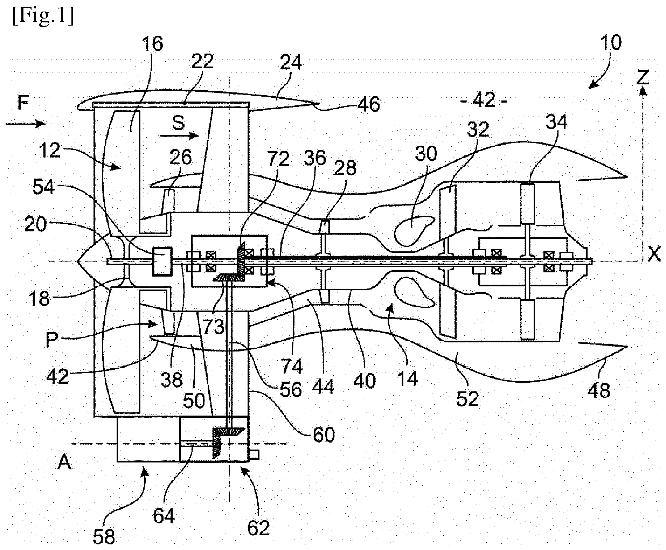

On a représenté à la figure 1 une turbomachine 10 d'axe longitudinal X à laquelle s'applique l'invention. La turbomachine 10 représentée est une turbomachine à double flux et double corps destinée à être montée sur un aéronef. Bien entendu, l'invention n'est pas limitée à ce type de turbomachine.

Dans la présente demande, les termes « amont », « aval », « axial » et « axialement » sont définis par rapport au sens de circulation des gaz dans la turbomachine et également suivant l'axe longitudinal, et même de gauche à droite sur la figure 1. Les termes « radial », « radialement », « interne » et « externe » sont également définis par rapport à un axe radial Z qui est perpendiculaire à l'axe X de la turbomachine.

Cette turbomachine 10 à double flux et double corps comprend une soufflante 12 qui est montée en amont d'un générateur de gaz ou moteur de turbine à gaz 14. La soufflante 12 comprend une pluralité d'aubes de soufflante 16 qui s'étendent radialement depuis la périphérie d'un disque 18 traversé par un arbre de soufflante 20. La soufflante 12 est entourée d'un carter de soufflante 22 centré sur l'axe longitudinal X. Le carter de soufflante 22 est porté par une nacelle 24 qui s'étend autour du générateur de gaz 14 suivant l'axe longitudinal X.

Le générateur de gaz 14 comprend d'amont en aval, un compresseur basse pression (BP) 26, un compresseur haute pression (HP) 28, une chambre de combustion 30, une turbine haute pression 32 et une turbine basse pression 34. Le rotor du compresseur HP 28 est relié au rotor de la turbine 32 via un arbre HP 36 centré sur l'axe longitudinal pour former un premier corps dit haute pression. Le rotor du compresseur BP est relié au rotor de la turbine BP via un arbre BP 38 centré sur l'axe longitudinal pour former un deuxième corps dit basse pression. L'arbre BP 38 s'étend à l'intérieur de l'arbre HP 36. L'arbre HP 36 est un arbre moteur, qui est entraîné en rotation suivant l'axe longitudinal X dans un carter interne 40 centré sur l'axe longitudinal.

Un flux d'air F qui entre dans la turbomachine via la soufflante 12 est divisé par un bec de séparation 42 de la turbomachine en un flux d'air primaire P qui traverse le générateur de gaz 3 et en particulier dans une veine primaire, et en un flux d'air secondaire S qui circule autour du générateur de gaz 14 dans une veine secondaire 42. La veine primaire 44 et la veine secondaire 42 sont coaxiales. Le flux d'air secondaire S est éjecté par une tuyère secondaire 46 terminant la nacelle 24 alors que le flux d'air primaire P est éjecté à l'extérieur de la turbomachine via une tuyère d'éjection 48 située en aval du générateur de gaz. La veine primaire 44 est délimitée au moins en partie, radialement, par le carter interne 40 et par un carter d'entrée 50. La veine secondaire 42 est quant à elle délimitée au moins en partie, radialement, par le carter d'entrée 50 et par le carter de soufflante. Le carter d'entrée 50 porte le bec de séparation 42 en amont et est prolongé en aval par un carter inter-veine 52 qui porte la tuyère d'éjection 48.

Dans une configuration optionnelle, un réducteur de vitesse 54 peut relier l'arbre BP 38 à l'arbre de soufflante 20, pour permettre de réduire la vitesse de la soufflante 12 à une vitesse inférieure à celle de l'arbre BP 38. Le réducteur de vitesse 54 permet d'autre part, l'agencement d'une soufflante 12 avec un diamètre important de manière à augmenter le taux de dilution. Le taux de dilution de la soufflante 12 est avantageusement supérieur à 10. Préférentiellement, le taux de dilution est compris entre 15 et 20. Le réducteur de vitesse peut être à train planétaire ou à train épicycloïdal.

La turbomachine 10 comprend un arbre d'entrainement 56 sensiblement radial qui est relié d'une part, à l'arbre haute pression 36 formant l'arbre principal de la turbomachine et d'autre part, à un boitier d'accessoires 58 de la turbomachine. L'arbre d'entraînement 56 s'étend sensiblement radialement, c'est-à-dire qu'il s'étend avec un angle compris entre 0° et 30° par rapport à l'axe radial Z, c'est à dire compris entre 60° et 90° par rapport à l'axe longitudinal X. Cet arbre d'entraînement permet d'entraîner l'arbre moteur, ici l'arbre HP 36 en rotation pour pouvoir démarrer la turbomachine via un équipement ou accessoire coopérant avec le boîtier d'accessoires qui va être décrit ci-après.

Dans le présent exemple, l'arbre d'entraînement 56 est appelé arbre radial car il s'étend sensiblement radialement, en étant logé dans un élément structural de la turbomachine. Cet élément structural s'étend sensiblement radialement entre le carter interne 40 et le carter de soufflante et/ou la nacelle 24. L'élément structural est un bras de carter 60 qui relie structurellement le carter interne 40 au carter de soufflante. A son extrémité, l'arbre d'entraînement 56 est reçu dans un dispositif de renvoi d'angle 62 dans lequel il est accouplé par engrènement avec un arbre de transfert 64, d'axe A sensiblement parallèle à l'axe X, qui est lui-même accouplé au boîtier d'accessoires 58.

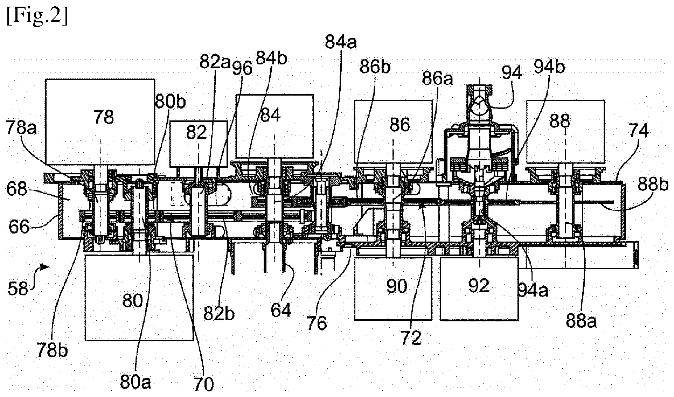

Le boîtier d'accessoires 58 est agencé dans un compartiment de la nacelle 24. La figure 2 représente un boîtier d'accessoires 58 connu de l'état de la technique, qui reçoit divers équipements ou accessoires de la turbomachine.

Ces équipements, montés sur le boîtier 58, peuvent être des pompes à carburant, des générateurs électriques, un groupe de lubrification, un démarreur, des pompes hydrauliques, etc.

Le boîtier 58 comprend de manière classique un carter 66 définissant une enceinte 68 abritant ici au moins un train d'engrenages comportant une série de pignons, et plus particulièrement ici deux trains d'engrenages 70 et 72. Le carter 58 comportant deux parois latérales parallèles sensiblement planes 74 et 76 opposées entre lesquelles sont montés des arbres porteurs de chacun des pignons du train d'engrenages.

L'arbre de transfert 64, qui a été partiellement représenté sur la figure 2, prélève ou fournit de la puissance mécanique à l'arbre HP 36. L'arbre de transfert 64 est accouplé aux deux trains d'engrenages 70, 72. Les deux trains d'engrenages 70, 72 ainsi décrits ont pour fonction d'entraîner en rotation une pluralité d'accessoires distincts fixés aux parois 74, 76. Par exemple, de manière non limitative de l'invention, ces accessoires comprennent ici deux générateurs électriques 78, 80 pour fournir de la puissance électrique à l'aéronef, une machine électrique 82 pour mettre en route le moteur ou générer un courant électrique, un générateur électrique 84 pour fournir du courant électrique à ou d'autres équipements du moteur tels que deux pompes hydrauliques 86, 88 pour fournir de l'huile pressurisée au moteur et/ou à ses équipements, une pompe principale à huile 90 pour fournir de l'huile de lubrification aux circuits d'huile du moteur et/ou de ses équipements, une pompe principale à carburant 92, et un déshuileur centrifuge 94, qui est un organe passif.

Bien entendu, il sera compris que cette disposition n'est fournie qu'à titre d'exemple et n'est pas limitative de l'invention et qu'un boîtier d'accessoires 58 selon l'invention peut comprendre un nombre différent d'accessoires.

Les parois latérales 74, 76 reçoivent donc ces accessoires 78, 80, 82, 84 86, 88, 90, 92 qui comportent chacun un arbre correspondant traversant une des parois 74, 76 et qui est accouplé avec un arbre porteur correspondant 78a, 80a, 82a, 84a, 86a, 88a, 90a, 92a d'un des pignons 78b, 80b, 82b, 84b, 86b, 88b, 90b, 92b d'un des trains d'engrenages 70 ou 72. La paroi latérale 76 est traversée par l'arbre de transfert 64 qui est accouplé avec l'arbre porteur 84 du pignon 84b du train d'engrenages 70.

Comme l'illustre la figure 2, les parois latérales 74, 76 délimitent dans l'enceinte 68 au moins un volume interne 96, représenté ici en traits pointillés qui entoure un arbre 82a porteur d'un pignon 82b. Ce volume 96 interne est agencé d'un côté du pignon 82b.

Dans le cadre de l'hybridation du boîtier d'accessoires 58, l'invention propose de tirer parti d'un tel volume interne 96 dans un boîtier d'accessoires 58 pour y loger une machine électrique 82. A cet effet, la machine électrique entoure l'arbre porteur 82a et le pignon 82b est dit pignon d'hybridation.

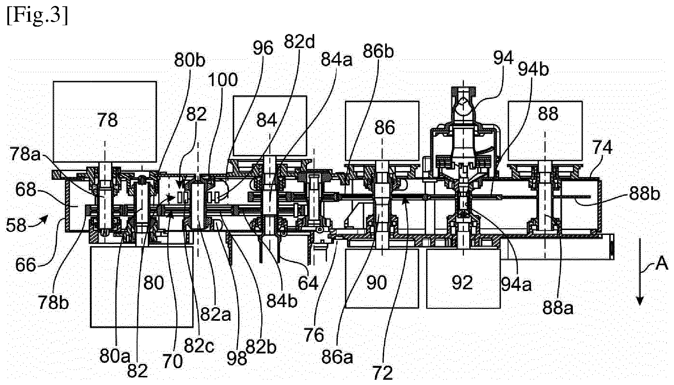

Cette configuration a été représentée de manière schématique à la figure 3.

Comme précédemment, le boîtier 58 reçoit une machine électrique 82 comportant un rotor 82c et un stator 82d. Toutefois, à la différence d'un boîtier 58 connu de l'état de la technique, la machine électrique 82 est logée dans le volume interne 96.

Plus particulièrement, le rotor 82c de la machine électrique 82 est porté par l'arbre porteur 82a du pignon d'hybridation 82b du train d'engrenages 70 et le stator 82d s'étend autour dudit rotor 82c et est monté au sein de l'enceinte 68 dans ledit volume interne 96.

Dans la configuration qui a été représentée ici, le pignon d'hybridation 82b est un pignon intermédiaire du train d'engrenages 70 mais il sera compris que cette disposition n'est pas limitative de l'invention.

Cette configuration est particulièrement avantageuse car elle permet de disposer d'une machine électrique 82 qui n'est plus fixée à la paroi latérale 74 mais qui est intégrée au carter 66. Par conséquent elle permet un gain d'encombrement axial du boîtier 58 selon l'axe A dans l'axe du pignon 82b du train d'engrenages 70. Cette configuration permet de disposer d'un boîtier 70 moins encombrant axialement, ce qui est particulièrement avantageux dans le cadre d'un boîtier devant être positionné à proximité de la zone centrale de le turbomachine.

En variante, (non représentée), l'intégration de la machine électrique 82 à l'intérieur du carter 66 permet de libérer la place précédemment utilisée sur la face latérale 74 pour y positionner un autre accessoire, ce qui permet de réduire l'encombrement transversal du boîtier 58.

Un autre avantage d'une telle disposition est que, du fait de son positionnement dans le carter 66, la machine électrique 82 peut bénéficier de la lubrification interne du carter 66, qui est nécessairement déjà présente du fait de la présence des trains d'engrenages 70, 72.

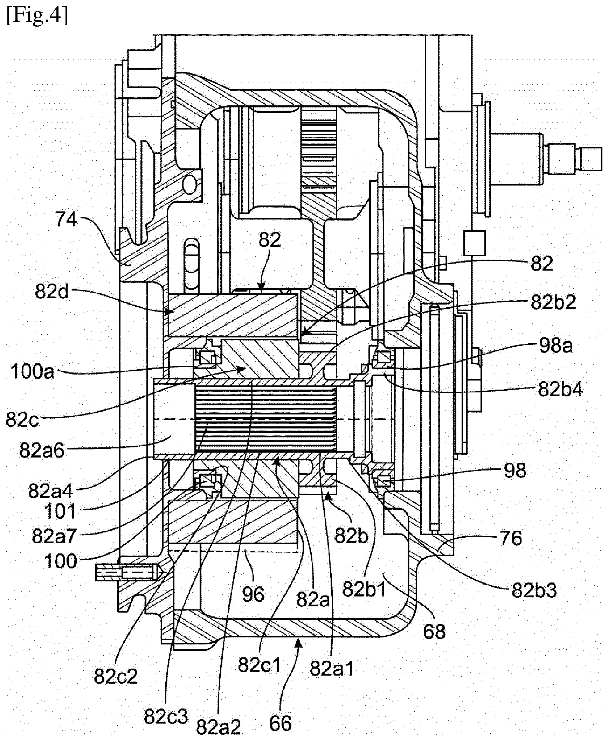

La figure 4 illustre de manière non limitative de l'invention un exemple de montage d'une telle machine électrique 82.

Comme on peut le voir, l'arbre 82a du pignon d'hybridation 82b est monté tournant dans le carter 66 entre deux paliers 98, 100 portés chacun par une des parois latérales 74, 76. L'arbre 82a comporte un premier tronçon 82a1 qui comporte le pignon d'hybridation 82b, et qui est agencé à proximité d'un premier desdits paliers à savoir le palier 98. Il comporte un second tronçon 82a2 qui s'étend entre le pignon d'hybridation 82b et le second palier 100 opposé. Le rotor 82c est fixé au second tronçon 82a2.

Dans l'exemple représenté ici, le second tronçon 82a2 de l'arbre 82a est d'une seule pièce avec le premier tronçon 82a1. Le pignon d'hybridation 82b est donc aussi d'une seule pièce avec l'arbre 82a.

Le pignon d'hybridation 82b comporte un voile 82b1 qui présente un diamètre supérieur au second tronçon 82a2 de l'arbre 82a du pignon d'hybridation 82b et qui porte à sa périphérie externe une denture d'engrènement 82b2. Une première face 82c1 du rotor 82c est reçue en butée contre ce voile 82b1, et le rotor 82c s'étend sensiblement axialement à partir dudit voile 82b1 vers le palier 100, et plus particulièrement suivant une partie du second tronçon 82a2 jusqu'à une portée extérieure 82c2 du rotor 82c qui est agencée en retrait d'une extrémité libre 82a4 de l'arbre 82a et qui reçoit une bague intérieure 100a du palier 100.

De ce fait le pignon d'hybridation 82b, l'arbre 82a et le rotor 82c peuvent être assemblés simplement en enfilant le rotor 82c directement sur l'arbre 82a en butée contre le voile 82b1 du pignon d'hybridation 82b. Puis le palier 100 est monté sur le rotor 82c et il permet donc d'immobiliser axialement le rotor 82c entre le palier 100 et le voile 82b1 du pignon 82b.

Il sera compris que des moyens de liaison en rotation seront interposés entre un alésage interne 82c3 du rotor 82c et le second tronçon 82a2 de l'arbre du pignon déterminé 82b.

Du côté du pignon d'hybridation 82b, celui-ci comporte un tronçon tubulaire 82b3 qui s'étend à partir de son voile 82b1 vers la paroi latérale adjacente 76 et qui comporte à son extrémité une première collerette d'extrémité 82b4 recevant au moins une bague intérieure 98a du palier 98.

L'arbre 82a du pignon d'hybridation 82b peut être plein mais de préférence, comme l'illustre la figure 4, il est tubulaire et il comporte un alésage 82a6 qui est coaxial avec un orifice 101 formé dans une des parois latérales adjacente, ici la paroi 74, ledit alésage comportant des cannelures internes 82a7d'accouplement avec un arbre d'un des accessoires (non représenté) fixé à la paroi adjacente 74.

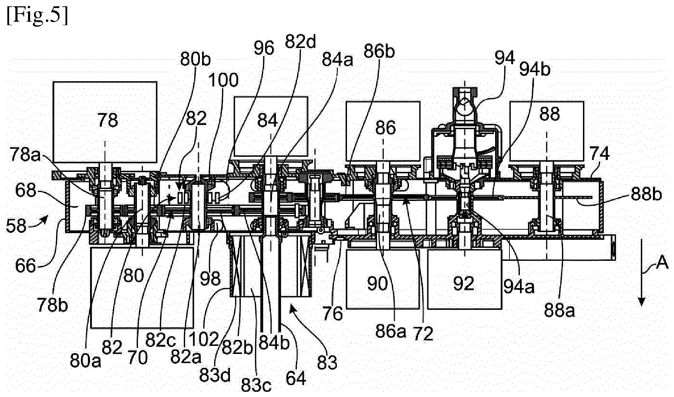

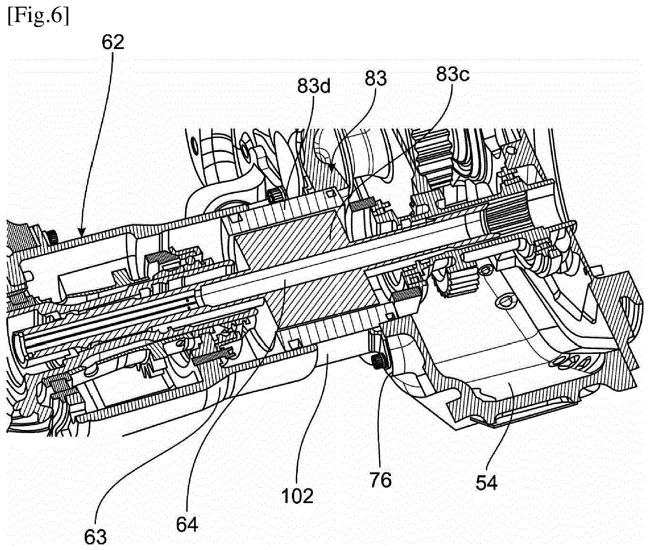

Les figures 5 et 6 illustrent une configuration optionnelle du boîtier 58 comportant une machine électrique supplémentaire 83. Comme l'illustre la figure 5, une face externe 76b d'une des parois latérales, ici la paroi 76, porte un fourreau tubulaire 102 qui est apte à entourer et à être traversé par l'arbre de transfert 64. Le fourreau 102 comporte une machine électrique supplémentaire 83 qui est montée à l'intérieur dudit fourreau 102. Un stator 83d de la machine électrique supplémentaire 82 est fixé dans le fourreau 102 et un rotor 83c de la machine électrique est fixé à l'arbre 64 de transfert. Le stator 83d de la machine électrique supplémentaire 83 est bien entendu monté autour du rotor 83c de de la machine électrique supplémentaire.

Comme on le voit sur la figure 6, le fourreau 102 est fixé à la paroi latérale 76 du boitier d'accessoires. Il est par ailleurs reçu dans un manchon tubulaire 63 du dispositif de renvoi d'angle de manière coulissante, de manière à absorber les jeux fonctionnels du dispositif de renvoi d'angle 62 et de l'arbre de transfert 64 lors de l'accouplement du dispositif de renvoi d'angle 62 au boîtier 58 et pour absorber les jeux résultants de la dilatation de ces pièces en fonctionnement.

Le montage s'en trouve par conséquent simplifié puisqu'il suffit lors du montage de fixer le fourreau 102 équipé du stator 83d au boîtier d'accessoires 58, puis de fixer le rotor 83c à l'arbre de transfert 64 et enfin d'insérer l'arbre de transfert 64 équipé de son rotor 83c dans le fourreau 102.

L'invention permet donc de bénéficier d'une turbomachine dont l'hybridation est réalisée de manière interne au boîtier d'accessoires, avec un boîtier 58 pouvant être logé de manière compacte à proximité de la zone centrale de la turbomachine.

## Revendications

1. Boîtier d'accessoires (58) pour une turbomachine (10) d'aéronef, ledit boîtier (58) comprenant un carter (66) définissant une enceinte (68) qui loge au moins un train d'engrenages (70, 72) comportant une série de pignons (78b, 80b, 82b, 84b, 86b, 88b, 94b), le carter (68) comportant deux parois latérales (74, 76) parallèles planes et opposées entre lesquelles sont montés des arbres (78a, 80a, 82a, 84a, 86a, 88a, 94a) porteurs de chacun des pignons (78b, 80b, 82b, 84b, 86b, 88b, 94b), du train d'engrenages (70, 72),
lesdites parois latérales (74, 76) du carter (68) recevant chacune des accessoires (78, 80, 82, 84, 86, 88, 90, 92, 94) qui comportent chacun un arbre traversant une des parois (74, 76) et qui est accouplé avec l'arbre porteur (78a, 80a, 82a, 84a, 86a, 88a, 94a) d'un des pignons (78b, 80b, 82b, 84b, 86b, 88b, 94b) du train d'engrenages (70, 72), et une des parois latérales (76) étant apte à être traversée par un arbre de transfert (64) d'un dispositif de transmission de puissance de la turbomachine qui est accouplé avec un arbre porteur (84a) d'un des pignons (84b) du train d'engrenages,
les parois latérales (74, 76) du carter (68) délimitant dans l'enceinte (68) un volume interne (96) qui entoure un arbre porteur (82a) d'au moins un pignon, dit pignon d'hybridation (82b), ledit arbre étant entouré par une machine électrique (82) dans le boîtier (58), ladite machine comportant au moins un rotor (82c) et un stator (82d),
le rotor (82c) de la machine électrique (82) étant porté par l'arbre porteur (82a) du pignon d'hybridation (82b) du train d'engrenages (70) et le stator (82d), s'étendant autour dudit rotor (82c), est monté au sein de l'enceinte (68) dans ledit volume interne (96), **caractérisé en ce que** ledit rotor (82c) comporte une face (82c1) venant en butée sur une portion du pignon d'hybridation (82b).

2. Boîtier (58) selon la revendication précédente, **caractérisé en ce que** l'arbre (82a) du pignon d'hybridation (82b) est monté tournant dans le carter (66) entre deux paliers (98, 100) portés chacun par une des parois latérales (74, 76) et **en ce qu'**il comporte un premier tronçon (82a1) comportant le pignon d'hybridation (82b), agencé à proximité d'un premier (98) desdits paliers, et un second tronçon (82a2) qui s'étend entre ledit pignon d'hybridation (82b) et un second palier opposé (100), le rotor (82c) étant fixé audit second tronçon (82a2).

3. Boîtier (58) selon la revendication précédente, **caractérisé en ce que** le second tronçon (82a2) de l'arbre (82a) est d'une seule pièce avec le premier tronçon (82a1).

4. Boîtier (58) selon l'une des revendications 2 ou 3, **caractérisé en ce que** le pignon d'hybridation (82b) comporte un voile (82b1) qui présente un diamètre supérieur au second tronçon (82a2) de l'arbre (82a) du pignon d'hybridation (82b) et qui porte à sa périphérie externe une denture d'engrènement (82b2), et **en ce que** le rotor (82c) s'étend axialement à partir dudit voile (82b1) vers le second palier (100), une portée extérieure (82c2) du rotor (82c) agencée en retrait d'une extrémité libre (82a4) de l'arbre (82a) recevant une bague intérieure (100a) du palier (100).

5. Boîtier (58) selon la revendication précédente, **caractérisé en ce que** des moyens de liaison en rotation sont interposés entre un alésage interne (82c3) du rotor (82c) et le second tronçon (82a2) de l'arbre (82a) du pignon d'hybridation (82b).

6. Boîtier (58) selon l'une des revendications 4 ou 5, **caractérisé en ce que** le pignon d'hybridation (82b) comporte à l'extrémité libre du premier tronçon (82a1) de l'arbre (82a) une première collerette d'extrémité (82b4) recevant au moins une bague intérieure (98a) d'un des paliers (98).

7. Boîtier (58) selon l'une des revendications précédentes, **caractérisé en ce que** l'arbre porteur (82a) du pignon d'hybridation (82) est tubulaire et **en ce qu'**il comporte un alésage (82a6) qui est coaxial avec un orifice (101) formé dans une des parois latérales (74) adjacente, ledit alésage (82a6) comportant des cannelures (82a7) internes d'accouplement avec un arbre d'un des accessoires fixé à ladite paroi adjacente (74).

8. Boîtier (58) selon l'une des revendications précédentes, **caractérisé en ce qu'**une face externe (76b) d'une des parois latérales (76) porte un fourreau tubulaire (102) qui est apte à entourer et à être traversé par l'arbre de transfert (64), et **en ce qu'**il comporte une machine électrique supplémentaire (83) qui est montée à l'intérieur dudit fourreau (102).

9. Boîtier (58) selon la revendication précédente, **caractérisé en ce qu'**un stator (83d) de la machine électrique supplémentaire (83) est fixé au fourreau (102) et **en ce qu'**un rotor (83c) de la machine électrique supplémentaire (83) est fixé à l'arbre de transfert (64), le stator (83d) de la machine électrique supplémentaire (83) étant monté autour du rotor (83c) de la machine électrique supplémentaire (83).

10. Turbomachine (10) d'aéronef comportant un dispositif de transmission de puissance comportant :
- un arbre d'entraînement (56) sensiblement radial monté solidaire en rotation d'un arbre principal de ladite turbomachine,
- un dispositif de renvoi d'angle (62) accouplé audit arbre d'entrainement (56),
- un arbre de transfert (64) accouplé audit dispositif de renvoi d'angle (62),
**caractérisé en ce qu'**elle comporte un boîtier d'accessoires (58) selon l'une des revendications précédentes qui est accouplé audit arbre de transfert (64).

## Patentansprüche

1. Zubehörgehäuse (58) für ein Turbotriebwerk (10) eines Luftfahrzeugs, wobei das Zubehörgehäuse (58) ein Gehäuse (66) umfasst, das eine Aufnahme (68) bildet, in der mindestens ein Getriebezug (70, 72) untergebracht ist, der eine Reihe von Ritzeln (78b, 80b, 82b, 84b, 86b, 88b, 94b) umfasst, wobei das Gehäuse (68) zwei parallele, ebene und gegenüberliegende Seitenwände (74, 76) aufweist, zwischen denen Wellen (78a, 80a, 82a, 84a, 86a, 88a, 94a) montiert sind, die Träger jedes der Ritzel (78b, 80b, 82b, 84b, 86b, 88b, 94b) des Getriebezugs (70, 72) sind,
wobei die Seitenwände (74, 76) des Gehäuses (68) jedes des Zubehörs (78, 80, 82, 84, 86, 88, 90, 92, 94) aufnehmen, die jeweils eine Welle umfassen, die eine der Wände (74, 76) durchquert und mit der Trägerwelle (78a, 80a, 82a, 84a, 86a, 88a, 94a) eines der Ritzel (78b, 80b, 82b, 84b, 86b, 88b, 94b) des Getriebezugs (70, 72) gekoppelt ist, und wobei eine der Seitenwände (76) von einer Übertragungswelle (64) einer Kraftübertragungsvorrichtung des Turbotriebwerks durchquert werden kann, die mit einer Trägerwelle (84a) eines der Ritzel (84b) des Getriebezugs gekoppelt ist,
wobei die Seitenwände (74, 76) des Gehäuses (68) in der Aufnahme (68) ein Innenvolumen (96) begrenzen, das eine Trägerwelle (82a) mindestens eines Ritzels, des Hybridisierungsritzels (82b), umgibt, wobei die Welle von einer elektrischen Maschine (82) im Getriebe (58) umgeben ist, wobei die Maschine mindestens einen Rotor (82c) und einen Stator (82d) umfasst,
wobei der Rotor (82c) der elektrischen Maschine (82) von der Trägerwelle (82a) des Hybridisierungsritzels (82b) des Getriebezugs (70) getragen wird und der Stator (82d), der sich um den Rotor (82c) herum erstreckt, innerhalb der Aufnahme (68) in dem Innenvolumen (96) montiert ist, **dadurch gekennzeichnet, dass** der Rotor (82c) eine Fläche (82c1) umfasst, die an einem Abschnitt des Hybridisierungsritzels (82b) anliegt.

2. Gehäuse (58) nach dem vorstehenden Anspruch, **dadurch gekennzeichnet, dass** die Welle (82a) des Hybridisierungsritzels (82b) drehbar im Gehäuse (66) zwischen zwei Lagern (98, 100) montiert ist, die jeweils von einer der Seitenwände (74, 76) getragen werden, und dass es einen ersten Abschnitt umfasst (82a1), der das Hybridisierungsritzel (82b) umfasst, das in der Nähe eines ersten (98) der Lager angeordnet ist, und einen zweiten Abschnitt (82a2) aufweist, der sich zwischen dem Hybridisierungsritzel (82b) und einem gegenüberliegenden zweiten Lager (100) erstreckt, wobei der Rotor (82c) an dem zweiten Abschnitt (82a2) befestigt ist.

3. Gehäuse (58) nach dem vorstehenden Anspruch, **dadurch gekennzeichnet, dass** der zweite Abschnitt (82a2) der Welle (82a) einstückig mit dem ersten Abschnitt (82a1) ausgebildet ist.

4. Gehäuse (58) nach einem der Ansprüche 2 oder 3, **dadurch gekennzeichnet, dass** das Hybridisierungsritzel (82b) einen Flügel (82b1) umfasst, dessen Durchmesser größer ist als der zweite Abschnitt (82a2) der Welle (82a) des Hybridisierungsritzels (82b) und an seinem Umfang eine Verzahnung (82b2) aufweist, und dass sich der Rotor (82c) axial von dem Flügel (82b1) zum zweiten Lager (100) erstreckt, wobei ein äußerer Umfang (82c2) des Rotors (82c) zurückgesetzt zu einem freien Ende (82a4) der Welle (82a) angeordnet ist, die einen Innenring (100a) des Lagers (100) aufnimmt.

5. Gehäuse (58) nach dem vorstehenden Anspruch, **dadurch gekennzeichnet, dass** Drehverbindungsmittel zwischen einer Innenbohrung (82c3) des Rotors (82c) und dem zweiten Abschnitt (82a2) der Welle (82a) des Hybridisierungsritzels (82b) angeordnet sind.

6. Gehäuse (58) nach einem der Ansprüche 4 oder 5, **dadurch gekennzeichnet, dass** das Hybridisierungsritzel (82b) am freien Ende des ersten Abschnitts (82a1) der Welle (82a) einen ersten Endkragen (82b4) umfasst, der mindestens einen Innenring (98a) eines der Lager (98) aufnimmt.

7. Gehäuse (58) nach einem der vorstehenden Ansprüche, **dadurch gekennzeichnet, dass** die Trägerwelle (82a) des Hybridisierungsritzels (82) rohrförmig ist und dass sie eine Bohrung (82a6) umfasst, die koaxial zu einer Öffnung (101) ist, die in einer der angrenzenden Seitenwände (74) ausgebildet ist, wobei die Bohrung (82a6) innere Keilnuten (82a7) zum Koppeln mit einer Welle eines des an der angrenzenden Wand (74) befestigten Zubehörs umfasst.

8. Gehäuse (58) nach einem der vorstehenden Ansprüche, **dadurch gekennzeichnet, dass** eine Außenfläche (76b) einer der Seitenwände (76) einen rohrförmigen Mantel (102) trägt, der die Übertragungswelle (64) umgeben und von dieser durchdrungen werden kann, und dass es eine zusätzliche elektrische Maschine (83) umfasst, die im Inneren der Hülse (102) montiert ist.

9. Gehäuse (58) nach dem vorstehenden Anspruch, **dadurch gekennzeichnet, dass** ein Stator (83d) der zusätzlichen elektrischen Maschine (83) an dem Mantel (102) befestigt ist, und dass ein Rotor (83c) der zusätzlichen elektrischen Maschine (83) an der Übertragungswelle (64) befestigt ist, wobei der Stator (83d) der zusätzlichen elektrischen Maschine (83) um den Rotor (83c) der zusätzlichen elektrischen Maschine (83) herum montiert ist.

10. Turbotriebwerk (10) eines Luftfahrzeugs, das eine Kraftübertragungsvorrichtung umfasst, umfassend:
- eine im Wesentlichen radiale Antriebswelle (56), die drehfest mit einer Hauptwelle des Turbotriebwerks verbunden ist,
- eine mit der Antriebswelle (56) gekoppelte Winkelgetriebevorrichtung (62),
- eine mit der Winkelgetriebevorrichtung (62) gekoppelte Übertragungswelle (64),
**dadurch gekennzeichnet, dass** sie ein Zubehörgehäuse (58) nach einem der vorstehenden Ansprüche umfasst, das mit der Übertragungswelle (64) gekoppelt ist.

## Claims

1. An accessory gearbox (58) for an aircraft turbomachine (10), said gearbox (58) comprising a casing (66) defining an enclosure (68) which houses at least one gear train (70, 72) comprising a series of pinions (78b, 80b, 82b, 84b, 86b, 88b, 94b), the casing (68) comprising two flat and opposite parallel side walls(74, 76) between which are mounted shafts (78a, 80a, 82a, 84a, 86a, 88a, 94a) supporting each of the pinions (78b, 80b, 82b, 84b, 86b, 88b, 94b) of the gear train (70, 72),
said side walls (74, 76) of the casing (68) each receiving accessories (78, 80, 82, 84, 86, 88, 90, 92, 94) which each comprise a shaft passing through one of the walls (74, 76) and which is coupled to the shaft (78a, 80a, 82a, 84a, 86a, 88a, 94a) supporting one of the pinions (78b, 80b, 82b, 84b, 86b, 88b, 94b) of the gear train (70, 72), and one of the side walls (76) being able to be passed through by a transfer shaft (64) of a power transmission device of the turbomachine which is coupled to a shaft (84a) supporting one of the pinions (84b) of the gear train,
the side walls (74, 76) of the casing (68) delimiting in the enclosure (68) an internal volume (96) which surrounds a shaft (82a) supporting at least one pinion, referred to as a hybridisation pinion (82b), said shaft being intended to be surrounded by an electric machine (82) in the gearbox (58), said machine comprising at least one rotor (82c) and one stator (82d),
the rotor (82c) of the electric machine (82) being supported by the shaft (82a) supporting the hybridisation pinion (82b) of the gear train (70) and the stator (82d), extending around said rotor (82c), is mounted within the enclosure (68) in said internal volume (96), **characterised in that** said rotor (82c) comprises a face (82c1) coming into abutment on a portion of the hybridisation pinion (82b).

2. The gearbox (58) according to the preceding claim, **characterised in that** the shaft (82a) of the hybridisation pinion (82b) is mounted so as to rotate in the casing (66) between two bearings (98, 100) each supported by one of the side walls (74, 76) and **in that** it comprises a first section (82a1) comprising the hybridisation pinion (82b), arranged close to a first (98) of said bearings, and a second section (82a2) which extends between said hybridisation pinion (82b) and a second opposite bearing (100), the rotor (82c) being secured to said second section (82a2).

3. The gearbox (58) according to the preceding claim, **characterised in that** the second section (82a2) of the shaft (82a) is in one piece with the first section (82a1).

4. The gearbox (58) according to one of claims 2 or 3, **characterized in that** the hybridisation pinion (82b) comprises a web (82b1) which has a diameter greater than the second section (82a2) of the shaft (82a) of the hybridisation pinion (82b) and which supports, at its external periphery, meshing toothing (82b2), and **in that** the rotor (82c) extends axially from said web (82b1) towards the second bearing (100), an outer surface (82c2) of the rotor (82c) arranged in a recess from a free end (82a4) of the shaft (82a) receiving an inner ring (100a) of the bearing (100).

5. The gearbox (58) according to the preceding claim, **characterised in that** rotational connection means are interposed between an internal bore (82c3) of the rotor (82c) and the second section (82a2) of the shaft (82a) of the hybridisation pinion (82b).

6. The gearbox (58) according to one of claims 4 or 5, **characterised in that** the hybridisation pinion (82b) comprises, at the free end of the first section (82a1) of the shaft (82a), a first end collar (82b4) receiving at least one inner ring (98a) of one of the bearings (98).

7. The gearbox (58) according to one of the preceding claims, **characterised in that** the shaft (82a) supporting the hybridisation pinion (82) is tubular and **in that** it comprises a bore (82a6) which is coaxial with an orifice (101) formed in one of the adjacent side walls (74), said bore (82a6) comprising internal splines (82a7) for coupling with a shaft of one of the accessories secured to said adjacent wall (74).

8. The gearbox (58) according to one of the preceding claims, **characterised in that** an external face (76b) of one of the side walls (76) supports a tubular sheath (102) which is able to surround and be passed through by the transfer shaft (64), and **in that** it comprises an additional electric machine (83) which is mounted inside said sheath (102).

9. The gearbox (58) according to the preceding claim, **characterised in that** a stator (83d) of the additional electric machine (83) is secured to the sheath (102) and **in that** a rotor (83c) of the additional electric machine (83) is secured to the transfer shaft (64), the stator (83d) of the additional electric machine (83) being mounted around the rotor (83c) of the additional electric machine (83).

10. An aircraft turbomachine (10) comprising a power transmission device comprising:
- a substantially radial drive shaft (56) securely mounted to rotate with a main shaft of said turbomachine,
- a transfer gearbox (62) coupled to said drive shaft (56),
- a transfer shaft (64) coupled to said transfer gearbox (62),
**characterised in that** it comprises an accessory gearbox (58) according to one of the preceding claims which is coupled to said transfer shaft (64).
